# EUROPEAN PATENT APPLICATION

(11) **EP 4 760 889 A1**
(43) Date of publication of application: **17.06.2026**
(21) Application number: 24869609.8
(22) Date of filing: 07.03.2024
(51) Int. Cl.: H01M 50/10

(54) **BATTERY AND ELECTRIC APPARATUS**

(30) Priority: 27.09.2023 CN 202311265770
(71) Applicant: Contemporary Amperex Technology Co., Limited, Ningde, Fujian 352100 (CN)
(72) Inventor: CHEN, Wei, Ningde, Fujian 352100 (CN); NIE, Xianzhen, Ningde, Fujian 352100 (CN)
(74) Representative: Kraus & Lederer PartGmbB
(86) International application number: PCT/CN2024/080487
(87) International publication number: WO 2025/066038

(57) **Abstract**

Embodiments of the present disclosure provide a battery and an electric apparatus. The battery comprises a container and a battery cell; a containment cavity is formed in the container; the battery cell is arranged in the containment cavity, and the container is provided with a clearance area; the clearance area protrudes outward in a direction away from the battery cell and forms a protruding platform, so that a corresponding inner wall of the containment cavity is recessed to form an accommodating slot; a protrusion is formed on an outer surface of the battery cell, and at least a portion of the protrusion is located in the accommodating slot.

## Description

### CROSS-REFERENCE TO RELATED APPLICATIONS

The present disclosure is based on the Chinese Patent Application No. 202311265770.4, filed on September 27, 2023 and entitled "BATTERY AND POWER CONSUMING APPARATUS" and claims priority to the Chinese Patent Application. The entire content of the Chinese Patent Application is incorporated in the present disclosure by reference.

### TECHNICAL FIELD

The present disclosure relates to the technical field of batteries, and in particular, to a battery and a power consuming apparatus.

### BACKGROUND

In recent years, batteries, which serve as an important constituent part of the new energy industry, have attracted increasingly more attention from people. New energy batteries are increasingly widely applied to life and industry, for example, new energy vehicles equipped with the batteries have been used widely. In addition, batteries are also increasingly applied to the field of energy storage, or the like.

A battery includes an accommodating box and a plurality of battery cells. The plurality of battery cells are disposed in the accommodating box and are electrically connected to each other in series and in parallel to implement charging and discharging.

Parts and components having various functions are provided on a case of the battery cell. Therefore, protrusions are formed on an outer contour of the case.

Due to the existence of the protrusions, a maximum dimension of the battery cell in a three-dimensional direction is greater than a maximum dimension of the case in the three-dimensional direction. To completely accommodate the battery cell in a space in the accommodating box, a dimension of the space in the accommodating box needs to be greater than the maximum dimension of the battery cell in the three-dimensional direction. Consequently, an overall three-dimensional dimension of the battery increases, which is not beneficial to battery arrangement and space utilization.

### SUMMARY

In view of this, embodiments of the present disclosure are expected to provide a battery and a power consuming apparatus.

To achieve the above-mentioned objective, the technical solutions of the embodiments of the present disclosure are implemented as follows:

Embodiments of the present disclosure provide a battery. The battery includes an accommodating box and a battery cell. An accommodating cavity is provided in the accommodating box. The battery cell is disposed in the accommodating cavity. The accommodating box is provided with an avoidance region. The avoidance region protrudes in a direction away from the battery cell to form a boss, so that an accommodating groove is formed on a corresponding inner wall of the accommodating cavity. A protrusion is formed on an outer surface of the battery cell, where at least part of the protrusion is located in the accommodating groove.

In the battery according to the embodiments of the present disclosure, the avoidance region is provided on the accommodating box, so that the protrusion on the battery cell can extend into the accommodating groove, thereby facilitating the reduction of a spacing between another region of the inner wall of the accommodating cavity and the battery cell, and facilitating the reduction of a volume of the accommodating cavity. Moreover, by forming the boss, it facilitates making a thickness of the position of the avoidance region consistent with a thickness of another region on the accommodating box, thereby facilitating the reduction of the thickness of the other region on the accommodating box, and facilitating the reduction of a three-dimensional dimension of the accommodating box and the reduction of an overall volume of the battery, which is beneficial to the improvement of an energy density and space utilization of the battery.

In some embodiments, a height of the boss does not exceed 2 times a height of the part of the protrusion in the accommodating groove.

As such, a dimension of the boss is reduced while a requirement that a space of the accommodating groove can accommodate the protrusion is satisfied, thereby facilitating the reduction of an outer contour dimension and the volume of the battery, and facilitating the improvement of mounting adaptability of the battery, which is beneficial to the improvement of the energy density and the space utilization of the battery.

In some embodiments, a spacing between a side wall of the accommodating groove and the protrusion is not greater than 30 mm. As such, it facilitates the reduction of the dimension of the boss, thereby facilitating the reduction of the outer contour dimension and the volume of the battery, and facilitating the improvement of the mounting adaptability of the battery, which is beneficial to the improvement of the energy density and the space utilization of the battery.

In some embodiments, a terminal post is provided on the protrusion. The terminal post is located in the accommodating groove and is spaced apart from an inner wall of the accommodating groove.

As such, on the one hand, the terminal post is separated from the accommodating box, reducing the risk of the terminal post being short-circuited, and reducing the probability of colliding with the terminal post due to vibration, collision, or the like during working of the battery, thereby protecting the terminal post. On the other hand, parts and components such as a bus-bar member can be arranged in a gap, improving space utilization of the accommodating groove while satisfying the objective of normal working of the battery.

In some embodiments, a spacing between a bottom wall of the accommodating groove and the terminal post is not greater than 20 mm. As such, on the one hand, the risk of a short-circuit due to contact between the terminal post and the accommodating box is reduced, and the probability of colliding with the terminal post due to vibration, collision, or the like during working of the battery is reduced. On the other hand, parts and components such as a bus-bar member can be arranged between them, improving the space utilization of the accommodating groove.

In some embodiments, a plurality of battery cells are provided. The plurality of battery cells are divided into at least one group. The number of the avoidance regions is the same as the number of groups of the battery cells. The protrusions of all the battery cells in each group are located in the same accommodating groove.

As such, on the one hand, it facilitates the reduction of the number of the bosses, thereby reducing steps of manufacturing the bosses, reducing assembly difficulty in an assembly process of the battery, and improving the efficiency of a manufacturing operation. On the other hand, it also facilitates the use of the same accommodating groove for electrically connecting all the battery cells in the same group.

In some embodiments, the battery cells in each group are divided into two rows in parallel, and the battery cells in the two rows are arranged in a same direction. The protrusions of all the battery cells are located in the same accommodating groove. The protrusion is located at an end of the battery cell close to the other row of battery cells.

As such, the protrusions in the two rows of battery cells can be accommodated by providing only one avoidance region on the accommodating box, facilitating the reduction of the number of the bosses, thereby reducing the steps of manufacturing the bosses, reducing the assembly difficulty in the assembly process of the battery, and improving the efficiency of the manufacturing operation. In addition, it facilitates implementing a high-voltage connection between the battery cells of different rows through the same accommodating groove.

In some embodiments, at least one group of battery cells are arranged in a length direction of the accommodating box. The avoidance region corresponding to the group of battery cells is symmetrically disposed with respect to a first central plane in a width direction of the accommodating box.

As such, it facilitates forming, on two sides of the boss in a width direction thereof, a flat region having a large area on an outer surface of the accommodating box provided with the boss, facilitating the arrangement, in this region, of other parts and components having large outer contour dimensions in the battery, thereby providing convenience for the arrangement of the other parts and components in the battery.

In some embodiments, at least one group of battery cells are arranged in a first direction, and at least one group of battery cells are arranged in a second direction. The first direction is orthogonal to the second direction.

As such, on the one hand, the capability of adapting to dimensions of different types of battery cells can be improved. On the other hand, two groups of battery cells respectively arranged in the two directions that are orthogonal to each other can further enhance the strength of the battery, thereby improving the overall structural strength of the battery.

In some embodiments, two protrusions are provided. The terminal posts are respectively provided on both of the protrusions and have opposite polarities. The two protrusions are each located at an end of the battery cell in a length direction of the battery cell. At least two avoidance regions are provided, so that the two protrusions on the battery cell are respectively located in different accommodating grooves.

As such, the probability of a short circuit caused by an electrical connection between the terminal posts of different polarities due to reasons such as accidental contact is reduced, improving the use safety of the battery.

In some embodiments, the plurality of battery cells are arranged into one row in the first direction. Two avoidance regions are provided and both extend in the first direction. The two avoidance regions are each located at an end of the accommodating box in the second direction. The first direction is orthogonal to the second direction.

As such, it facilitates forming a flat region having a large area between the two avoidance regions, facilitating the arrangement, in this region, of other parts and components having large outer contour dimensions in the battery, thereby providing convenience for the arrangement of the other parts and components in the battery.

In some embodiments, the plurality of battery cells are divided into two rows which are arranged in parallel. The battery cells in each row are arranged in the first direction. The avoidance region extends in the first direction. A plurality of avoidance regions are provided and include first sub-regions and a second sub-region. The second sub-region is located between the two first sub-regions and is spaced apart from the two first sub-regions in the second direction. The two first regions are each located at an end of the accommodating box in the second direction. One protrusion of the battery cell in each row is located in the accommodating groove corresponding to the first sub-region. The other protrusion thereof and one protrusion of a battery cell in the other row are jointly located in the accommodating groove corresponding to the first sub-region. The first direction is orthogonal to the second direction.

As such, it facilitates the adaptation to the battery cells of different dimensions in the second direction, and facilitates an electrical connection between the battery cells of different rows using a bus-bar member.

In some embodiments, the battery includes a bus-bar member. A plurality of battery cells are provided. The plurality of battery cells are divided into at least one group. The battery cells in each group form one row. The terminal post is provided on the protrusion. Two terminal posts are provided and have opposite polarities. The bus-bar member electrically connects two terminal posts of two adjacent ones of the battery cells in each group that have opposite polarities. The terminal posts of the two adjacent battery cells in each group are correspondingly disposed, so that the terminal posts of the battery cells in each group are arranged into two rows, where the terminal posts in each row have the same polarity. As such, it facilitates the arrangement of the battery cells of a same model in a unified arrangement direction, facilitating model simplification of the battery cells in the battery, thereby simplifying a process of the battery, and reducing production costs.

Alternatively, two adjacent ones of the terminal posts in each row have opposite polarities. As such, it facilitates shortening a distance between two terminal posts of the adjacent battery cells in the same group that have opposite polarities, thereby facilitating shortening a connection length of the bus-bar member.

Embodiments of the present disclosure further provide a power consuming apparatus. The power consuming apparatus includes the battery according to the foregoing embodiments. The battery serves as a power supply of the power consuming apparatus.

As such, the use of the battery according to the foregoing embodiments in the power consuming apparatus facilitates the improvement of the energy density and space utilization of the battery.

### BRIEF DESCRIPTION OF THE DRAWINGS

FIG. 1 is a schematic diagram of a battery according to a first embodiment of the present disclosure;
FIG. 2 is a cross-sectional view of the embodiment in FIG. 1;
FIG. 3 is a partial enlarged view of a position A in FIG. 2;
FIG. 4 is an exploded view of the embodiment in FIG. 1;
FIG. 5 is a schematic diagram of a battery according to a second embodiment of the present disclosure;
FIG. 6 is a cross-sectional view of the embodiment in FIG. 5;
FIG. 7 is a schematic diagram of a battery according to a third embodiment of the present disclosure;
FIG. 8 is a cross-sectional view of the embodiment in FIG. 7;
FIG. 9 is an exploded view of the embodiment in FIG. 7;
FIG. 10 is a schematic diagram of a battery according to a fourth embodiment of the present disclosure;
FIG. 11 is a cross-sectional view of the embodiment in FIG. 10;
FIG. 12 is an exploded view of the embodiment in FIG. 10;
FIG. 13 is a schematic diagram of a battery according to a fifth embodiment of the present disclosure;
FIG. 14 is an exploded view of the embodiment in FIG. 10;
FIG. 15 is a schematic diagram of a battery according to a sixth embodiment of the present disclosure;
FIG. 16 is a cross-sectional view of the embodiment in FIG. 15;
FIG. 17 is an exploded view of the embodiment in FIG. 15;
FIG. 18 is a schematic diagram of a battery according to a seventh embodiment of the present disclosure;
FIG. 19 is an exploded view of the embodiment in FIG. 18;
FIG. 20 is a schematic diagram of a battery according to an eighth embodiment of the present disclosure;
FIG. 21 is a cross-sectional view of the embodiment in FIG. 20;
FIG. 22 is an exploded view of the embodiment in FIG. 20;
FIG. 23 is a schematic diagram of a connection of a bus-bar member according to an embodiment of the present disclosure;
FIG. 24 is a schematic diagram of a connection of a bus-bar member according to another embodiment of the present disclosure; and
FIG. 25 is a schematic diagram of a power consuming apparatus according to an embodiment of the present disclosure.

### Descriptions of reference numerals:

battery 10; accommodating box 11; accommodating cavity 11a; avoidance region 11b; accommodating groove 11c; first central plane 11d; first sub-region 11e; second sub-region 11f; boss 111; box cover 112; box body 113; reinforcing beam 114; battery cell 12; protrusion 121; terminal post 122; bus-bar member 13;
vehicle 1000; controller 200; and motor 300.

### DETAILED DESCRIPTION

It should be noted that, embodiments in the present disclosure and technical features in the embodiments can be combined with each other without conflict. The detailed description in specific implementations should be understood as illustrative explanation of the purpose of the present disclosures, and should not be construed as improper limitation on the present disclosure.

Unless otherwise defined, meanings of all technical and scientific terms used herein are the same as those usually understood by a person skilled in the art to which the present disclosure belongs. The terms used herein are merely intended to describe objectives of specific embodiments, but are not intended to limit the present disclosure. The terms "include/comprise" and "have" and any variations thereof in the specification and the Brief Description of the Drawings of the present disclosure are intended to cover non-exclusive inclusions.

In the description according to the embodiments of the present disclosure, the technical terms "first", "second", "third", and the like are only used for distinguishing different objects, and should not be understood as indicating or implying relative importance or implying the number, specific order or primary and secondary relationship of indicated technical features. In the description according to the embodiments of the present disclosure, "a plurality of" means two or more, unless otherwise expressly and specifically defined.

Reference herein to "an embodiment" means that a particular feature, structure, or characteristic described in connection with the embodiment may be included in at least one embodiment of the present disclosure. The term appearing at various positions of the specification does not necessarily refer to the same embodiment or an independent or alternative embodiment that is mutually exclusive with another embodiment. A person skilled in the art explicitly or implicitly understands that the embodiments described herein may be combined with other embodiments.

In the descriptions according to the embodiments of the present disclosure, the term "and/or" describes only an association relationship for describing associated objects and represents that three relationships may be present. For example, A and/or B may represent the presence of the three cases: A alone, both A and B, and B alone. In addition, the character "/" herein generally represents an "or" relationship between the associated objects.

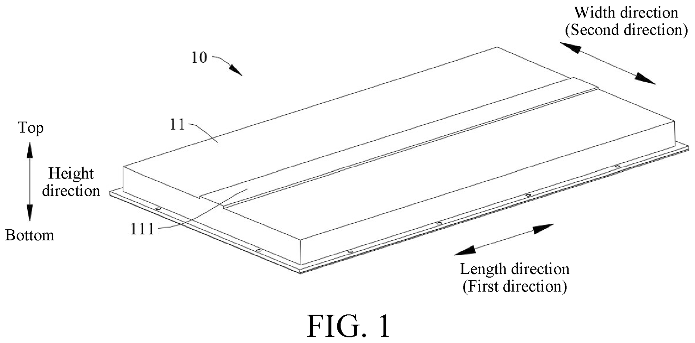

In the descriptions according to the embodiments of the present disclosure, the orientations or positional relationships indicated by the technical terms such as "height direction", "first direction", "second direction", "length direction", "width direction", "top", and "bottom" are based on the orientations or positional relationships shown in FIG. 1, and are only for the convenience of describing the embodiments of the present disclosure and simplifying the description, rather than indicating or implying that the indicated apparatus or element necessarily has a specific orientation or is constructed, operated, or used in the specific orientation. Therefore, they cannot be understood as limitations on the embodiments of the present disclosure.

Currently, new energy batteries are increasingly widely applied to life and industry. The new energy batteries are not only used in energy storage power supply systems such as hydraulic power, thermal power, wind power and solar power stations, but also widely used in electric vehicles such as electric bicycles, electric motorcycles, and electric automobiles and in many fields such as aerospace. As an application field of power batteries continues to expand, a market demand for power batteries continues to increase.

In the description according to the embodiments of the present disclosure, unless otherwise explicitly specified and limited, the technical terms "mount", "connect", "connection", and "fix" should be understood in a broad sense. For example, the connection may be a fixed connection, a detachable connection, or an integral connection; the connection may be a mechanical connection, or an electrical connection; or the connection may be a direct connection, an indirect connection through an intermediate medium, internal communication between two elements, or an interaction relationship between two elements. A person of ordinary skill in the art may understand specific meanings of the terms in the embodiments of the present disclosure based on specific situations.

In the description according to the embodiments of the present disclosure, unless otherwise explicitly specified and limited, the technical term "contact" should be understood in a broad sense. The contact may be direct contact or contact through an intermediate medium layer, may be contact with substantially no interaction force between objects that are in contact, or may be contact with interaction force between two objects that are in contact.

The embodiments of the present disclosure are described in detail below.

A battery cell has a case. Parts and components such as an anti-explosion valve and a terminal post are provided on the case. These parts and components protrude from an outer contour surface of the case to form protrusions on the case. Due to these protrusions, a maximum dimension of the battery cell in a protruding direction of the protrusion is greater than a dimension of the case in this direction. To accommodate, in an accommodating box of a battery, these batteries having protrusions, a dimension of a side wall of an inner space of the accommodating box in the protruding direction of the protrusion is not less than the maximum dimension of the battery cell in the protruding direction of the protrusion, resulting in a gap between the side wall of the inner space and the case. As such, a waste of the inner space of the accommodating box occurs, and an overall volume of the battery is increased.

The embodiments of the present disclosure aim to provide a battery. A boss is provided on an accommodating box of the battery. A space communicating with an accommodating cavity in the accommodating box is provided in the boss, so as to accommodate a protrusion of a battery cell located in the accommodating cavity, thereby facilitating the reduction of a three-dimensional dimension of the accommodating box, and improving space utilization.

Specifically, embodiments of the present disclosure provide a battery 10. Referring to FIG. 1 to FIG. 4, the battery 10 includes an accommodating box 11 and a battery cell 12. An accommodating cavity 11a is provided in the accommodating box 11. The battery cell 12 is disposed in the accommodating cavity 11a. The accommodating box 11 is provided with an avoidance region 11b. The avoidance region 11b protrudes in a direction away from the battery cell 12 to form a boss 111, so that an accommodating groove 11c is formed on a corresponding inner wall of the accommodating cavity 11a. A protrusion 121 is formed on an outer surface of the battery cell 12, where at least part of the protrusion 121 is located in the accommodating groove 11c.

The accommodating box 11 forms the accommodating cavity 11a to accommodate the battery cell 12, thereby protecting the battery cell 12 during movement. Moreover, a heat dissipation apparatus and a heating apparatus may be disposed in the accommodating box 11, to provide an appropriate working temperature for working of the battery cell 12.

The battery cell 12, that is, a cell, refers to a smallest unit in the battery 10 that can generate electric energy.

The number of the battery cells 12 in the battery 10 is not limited, where one or more battery cells may be provided. A plurality of battery cells 12 are electrically connected to each other in series and in parallel through a bus-bar member 13, to implement synchronous charging and synchronous discharging of the battery cells 12.

The battery cell 12 includes a case, an electrode assembly, a terminal post 122, and an anti-explosion valve. The case provides a mounting space for the electrode assembly and has a protective function. In addition, the case is used for injection of an electrolyte therein. A positive electrode, a negative electrode, and a separation member are provided in the electrode assembly. During charging and discharging of the battery cell 12, active ions (for example, lithium ions) in the electrolyte reciprocate between the positive electrode and the negative electrode for intercalation and deintercalation, and electrochemical reactions occur. The separation member is disposed between the positive electrode and the negative electrode, which can prevent a short circuit between the positive and negative electrodes and allow the active ions to pass through. The terminal post 122 penetrates through the case. The terminal post 122 is electrically connected to the electrode assembly, to lead out a current generated by the electrode assembly. The anti-explosion valve may be selectively opened, so that when a thermal runaway of the electrode assembly occurs, it is opened to relieve pressure, reducing the probability of an explosion of the battery cell 12.

The protrusion 121 on the surface of the battery cell 12 is a structure that protrudes from the outer surface of the case. A specific form of the protrusion 121 is not limited, which is, for example, the anti-explosion valve or the terminal post 122.

The boss 111 and the accommodating groove 11c are formed in the avoidance region 11b, where the accommodating groove 11c is used for accommodating the protrusion 121. The accommodating groove 11c and the boss 111 are respectively formed on an inner surface and an outer surface of the accommodating box 11 at the same position. That is, it facilitates making a thickness of the avoidance region 11b consistent with a thickness of another region on the accommodating box 11.

In the battery 10 according to the embodiments of the present disclosure, the avoidance region 11b is provided on the accommodating box 11, so that the protrusion 121 on the battery cell 12 can extend into the accommodating groove 11c, thereby facilitating the reduction of a spacing between another region of the inner wall of the accommodating cavity 11a and the battery cell 12, and facilitating the reduction of a volume of the accommodating cavity 11a. Moreover, by forming the boss 111, it facilitates making the thickness of the position of the avoidance region 11b consistent with the thickness of the other region on the accommodating box 11, thereby facilitating the reduction of the thickness of the other region on the accommodating box 11, and facilitating the reduction of a three-dimensional dimension of the accommodating box 11 and the reduction of an overall volume of the battery 10, which is beneficial to the improvement of an energy density and space utilization of the battery 10.

The battery 10 may be used, without limitation, in a power consuming apparatus such as a vehicle, a ship, or an aircraft. A power supply system of the power consuming apparatus may be formed by using the battery cell, the battery, and the like according to the embodiments of the present disclosure.

The battery 10 likewise may be used, without limitation, in a power consuming apparatus such as an energy storage power supply system, a vehicle, a ship, or an aircraft. The use of the battery can provide higher total energy. Moreover, the battery 10 is formed by providing a plurality of battery cells 12 in a sealed box body, resulting in more reliable anti-dirt and waterproof performance, and therefore is applicable to a use scenario with a worse, moist, or even immersed-in-water use environment.

Embodiments of the present disclosure provide a power consuming apparatus including the above-described battery 10 or the battery 10 for providing electric energy. The power consuming apparatus may be, but is not limited to, a mobile phone, a tablet computer, a notebook computer, an electric toy, an electric tool, an electric bicycle, an electric automobile, a ship, a spacecraft, and the like. The electric toy may include a stationary or mobile electric toy, such as a game machine, an electric car toy, an electric ship toy, and an electric airplane toy. The spacecraft may include an airplane, a rocket, a space shuttle, a spaceship, or the like.

For ease of description, a power consuming apparatus according to an embodiment of the present disclosure being a vehicle 1000 is used as an example for description in the following embodiments. The description is made below with reference to the accompanying drawings.

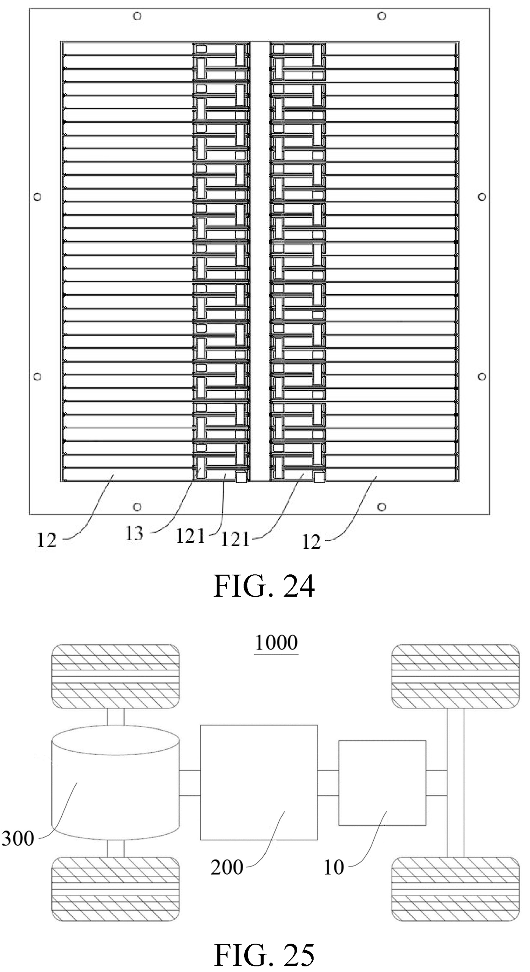

FIG. 25 is a schematic diagram of a structure of a vehicle 1000 according to an embodiment of the present disclosure. The vehicle 1000 may be a fuel powered vehicle, a gas powered vehicle, or a new energy vehicle. The new energy vehicle may be a pure electric vehicle, a hybrid electric vehicle, an extended-range vehicle, or the like. As shown in FIG. 25, the battery 10 is disposed inside the vehicle 1000. The battery 10 may be disposed at the bottom, head, or tail of the vehicle 1000. The battery 10 may be configured to supply power to the vehicle 1000. For example, the battery 10 may serve as an operational power supply of the vehicle 1000. The vehicle 1000 may further include a controller 200 and a motor 300. The controller 200 is configured to control the battery 10 to supply power to the motor 300, for example, to meet demands for working power during starting, navigation, and traveling of the vehicle 1000.

In some embodiments of the present disclosure, the battery 10 can serve not only as the operational power supply of the vehicle 1000, but also as a driving power supply of the vehicle 1000, in place of or partially in place of fuel or natural gas, to provide driving power for the vehicle 1000.

In the battery 10, a plurality of battery cells 12 may be provided. The plurality of battery cells 12 may be connected in series, in parallel, or in series-parallel. Series-parallel connection means that both series connection and parallel connection exist among the plurality of battery cells 12. The plurality of battery cells 12 may be directly connected together in series, in parallel, or in series-parallel, and then a whole formed by the plurality of battery cells 12 may be placed in the accommodating box 11. The battery 10 may further include another structure. For example, the battery 10 may further include a bus-bar member 13 configured to implement an electrical connection between the plurality of battery cells 12.

In the embodiments of the present disclosure, a battery cell 12 may be a secondary battery. The secondary battery refers to a battery cell 12 of which active materials thereof can be activated for reuse by means of charging after the battery cell 12 is discharged.

The battery cell 12 may be a lithium ion battery, a sodium ion battery, a sodium-lithium ion battery, a lithium metal battery, a sodium metal battery, a lithium-sulfur battery, a magnesium ion battery, a nickel-metal hydride battery, a nickel-cadmium battery, a lead accumulator, or the like. This is not limited in the embodiments of the present disclosure.

As an example, the battery cell 12 may be a cylindrical battery cell, a prismatic battery cell, a pouch battery cell, or other shapes of battery cells. The prismatic battery cell includes a square-case battery cell, a blade-shaped battery cell, or a multi-prismatic battery. The multi-prismatic battery is, for example, a hexagonal prismatic battery. The embodiments of the present disclosure impose no specific limitations.

The battery 10 according to some embodiments of the present disclosure is described in detail below.

It can be understood that the protrusion 121 may be entirely located in the accommodating groove 11c, or may be partially located in the accommodating groove 11c.

A specific manner of forming the accommodating groove 11c and the boss 111 in the avoidance region 11b is not limited. For example, the accommodating box 11 is made of a metal material, and the accommodating groove 11c and the boss 111 are formed in a single stroke through a stamping process.

It can be understood that a protruding direction of the boss 111 is the same as a recess direction of the accommodating groove 11c.

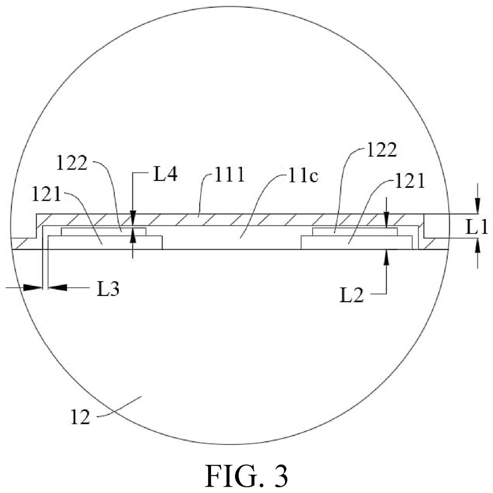

In some embodiments, referring to FIG. 3, a height of the boss 111 does not exceed 2 times a height of the part of the protrusion 121 in the accommodating groove 11c. That is, L1 ≤ 2·L2.

The height of the boss 111 refers to a maximum dimension by which the boss 111 protrudes from the outer surface of the battery cell 12 in the protruding direction thereof.

The height of the part of the protrusion 121 in the accommodating groove 11c refers to a dimension of the protrusion 121 in the accommodating groove 11c in the protruding direction of the boss 111.

As such, the dimension of the boss 111 is reduced while a requirement that a space of the accommodating groove 11c can accommodate the protrusion 121 is satisfied, thereby facilitating the reduction of an outer contour dimension and the volume of the battery 10, and facilitating the improvement of mounting adaptability of the battery 10, which is beneficial to the improvement of the energy density and the space utilization of the battery 10.

A specific ratio relationship between the height of the part of the protrusion 121 in the accommodating groove 11c and the height of the boss 111 is not limited, which is, for example, 1.2 times, 1.5 times, 2 times, or the like.

It can be understood that, in some embodiments, an edge of an opening of the accommodating groove 11c is attached to a part of the battery cell 12 other than the protrusion 121, so that the protrusion 121 is completely located in the accommodating groove 11c, thereby making full use of the space in the accommodating groove 11c.

A specific manner of measuring the height of the boss 111 is not limited. For example, a distance between an end surface of the boss 111 that is on a side away from another part of the accommodating box 11 in the protruding direction of the boss and the outer surface of the accommodating box 11 is measured by using a vernier caliper.

A specific manner of measuring the height of the protrusion 121 is not limited. For example, a distance between an end surface of the protrusion 121 that is on a side away from another part of the battery cell 12 in the protruding direction of the boss 111 and the outer surface of the battery cell 12 is measured by using a vernier caliper.

In some embodiments, referring to FIG. 3, a spacing between a side wall of the accommodating groove 11c and the protrusion 121 is not greater than 30 mm (millimeters). That is, L3 ≤ 30 mm.

The side wall of the accommodating groove 11c refers to a part of the inner wall of the accommodating groove 11c that is on a side perpendicular to the recess direction of the accommodating groove 11c.

As such, it facilitates the reduction of the dimension of the boss 111, thereby facilitating the reduction of the outer contour dimension and the volume of the battery 10, and facilitating the improvement of the mounting adaptability of the battery 10, which is beneficial to the improvement of the energy density and the space utilization of the battery 10.

It can be understood that a gap of a particular dimension is formed between the side wall of the accommodating groove 11c and the protrusion 121, thereby reducing the probability of interference between them during mounting of the battery 10, and reducing assembly difficulty. In addition, another component in the battery 10 can be arranged in the formed gap, improving space utilization of the accommodating groove 11c.

A specific dimension value of the spacing between the side wall of the accommodating groove 11c and the protrusion 121 is not limited, which is, for example, 5 mm, 10 mm, 15 mm, 20 mm, 25 mm, 30 mm, or the like.

In some embodiments, referring to FIG. 3, the terminal post 122 is provided on the protrusion 121. The terminal post 122 is located in the accommodating groove 11c and is spaced apart from the inner wall of the accommodating groove 11c.

As such, on the one hand, the terminal post 122 is separated from the accommodating box 11, reducing the risk of the terminal post 122 being short-circuited, and reducing the probability of colliding with the terminal post 122 due to vibration, collision, or the like during working of the battery 10, thereby protecting the terminal post 122. On the other hand, parts and components such as the bus-bar member 13 can be arranged in a gap, improving the space utilization of the accommodating groove 11c while satisfying the objective of normal working of the battery 10.

In some embodiments, referring to FIG. 3, a spacing between a bottom wall of the accommodating groove 11c and the terminal post 122 is not greater than 20 mm. That is, L4 ≤ 20 mm.

The bottom wall of the accommodating groove 11c refers to a part of the inner wall of the accommodating groove 11c that is on a side away from the opening of the accommodating groove 11c in the recess direction of the accommodating groove.

As such, on the one hand, the risk of a short-circuit due to contact between the terminal post 122 and the accommodating box 11 is reduced, and the probability of colliding with the terminal post 122 due to vibration, collision, or the like during working of the battery 10 is reduced. On the other hand, parts and components such as the bus-bar member 13 can be arranged between them, improving the space utilization of the accommodating groove 11c.

A specific dimension value of the spacing between the bottom wall of the accommodating groove 11c and the terminal post 122 is not limited, which is, for example, 5 mm, 10 mm, 15 mm, 20 mm, or the like.

It can be understood that a specific arrangement manner of the protrusion 121 is related to an arrangement manner of the battery cell 12.

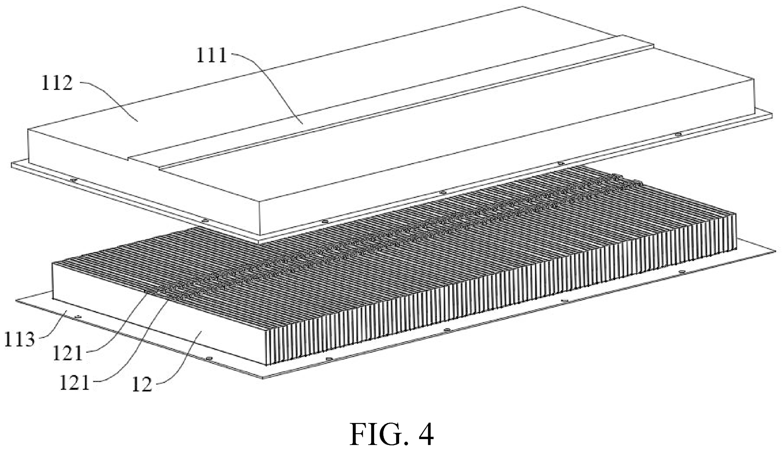

Specifically, referring to FIG. 4, a plurality of battery cells 12 are provided. The plurality of battery cells 12 are divided into at least one group. The number of the avoidance regions 11b is the same as the number of groups of the battery cells 12. The protrusions 121 of all the battery cells 12 in each group are located in the same accommodating groove 11c.

The battery cells 12 in each group are arranged in a same direction.

As such, on the one hand, it facilitates the reduction of the number of the bosses 111, thereby reducing steps of manufacturing the bosses 111, reducing assembly difficulty in an assembly process of the battery 10, and improving the efficiency of a manufacturing operation. On the other hand, it also facilitates the use of the same accommodating groove 11c for electrically connecting all the battery cells 12 in the same group.

It can be understood that in each row of battery cells 12, the battery cells 12 may be spaced apart from each other; or may be attached to each other, so as to improve space utilization.

It can be understood that an extension direction of the boss 111 and the accommodating groove 11c is the same as an arrangement direction of a group of battery cells 12 corresponding thereto.

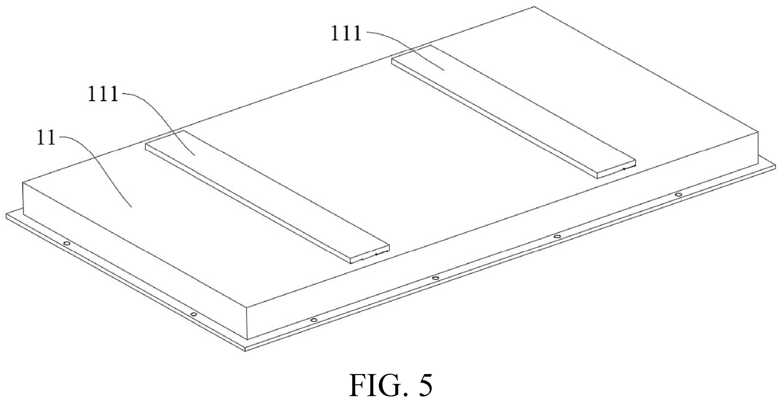

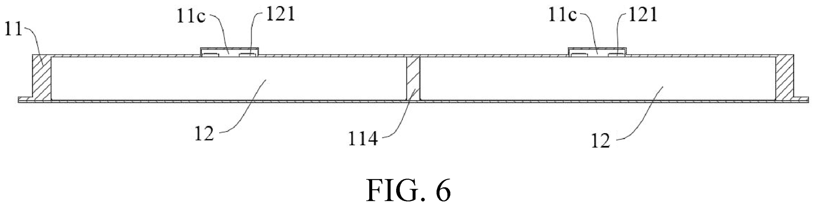

A specific number of the formed groups of the battery cells 12 is not limited. For example, referring to FIG. 1 and FIG. 4, the plurality of battery cells 12 are arranged into one group, and one protrusion 121 is correspondingly disposed. For another example, referring to FIG. 5 and FIG. 6, a plurality of battery cells 12 are arranged into two groups, and two protrusions 121 are correspondingly disposed.

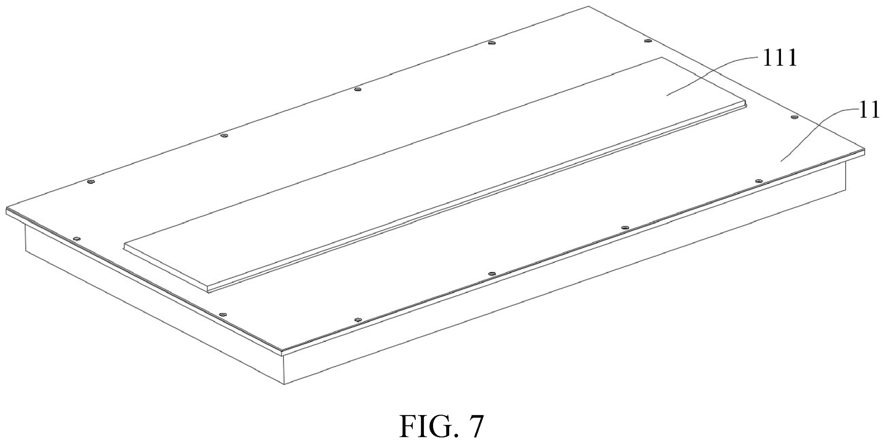

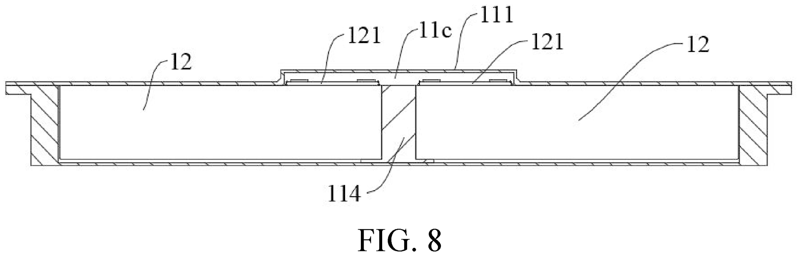

In some embodiments, referring to FIG. 7 to FIG. 9, the battery cells 12 in each group are divided into two rows in parallel, and the battery cells 12 in the two rows are arranged in a same direction. The protrusions 121 of all the battery cells 12 are located in the same accommodating groove 11c. The protrusion 121 is located at an end of the battery cell 12 close to the other row of battery cells 12.

That is, the protrusions 121 of the two rows of battery cells 12 are located in the same accommodating groove 11c.

As such, the protrusions 121 in the two rows of battery cells 12 can be accommodated by providing only one avoidance region 11b on the accommodating box 11, facilitating the reduction of the number of the bosses 111, thereby reducing the steps of manufacturing the bosses 111, reducing the assembly difficulty in the assembly process of the battery 10, and improving the efficiency of the manufacturing operation. In addition, it facilitates implementing a high-voltage connection between the battery cells 12 of different rows through the same accommodating groove 11c.

The protrusion 121 of the battery cell 12 is located at the end close to the other row of battery cells 12, facilitating the reduction of a spacing between the protrusions 121 of the two rows of battery cells 12, and thereby facilitating the reduction of the dimension of the boss 111 and the reduction of the volume of the battery 10.

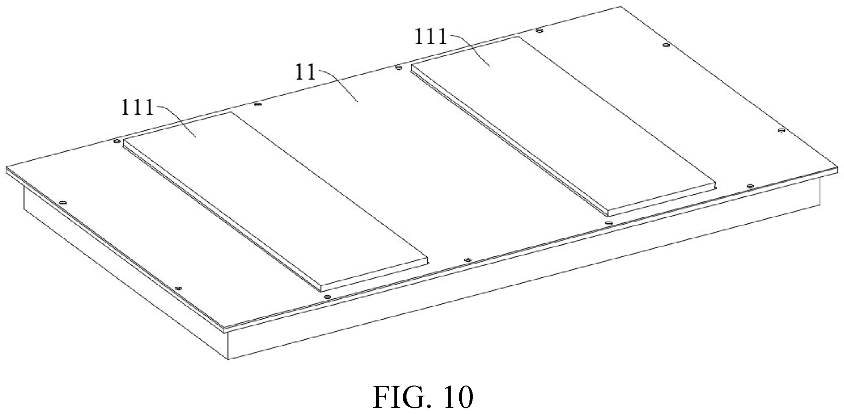

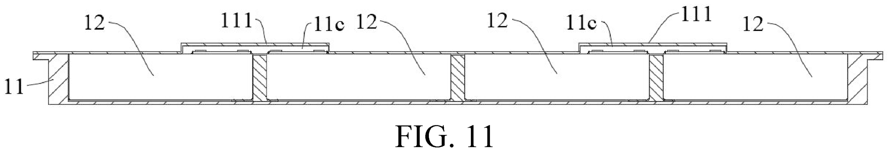

In some embodiments, referring to FIG. 10, FIG. 11, and FIG. 12, the battery cells 12 are divided into a plurality of groups. The battery cells 12 in each group are divided into two rows in parallel and in a same arrangement direction. In each group of battery cells 12, the protrusions 121 of all the battery cells 12 are located in the same accommodating groove 11c, and the protrusion 121 is located at an end of the battery cell 12 close to the other row of battery cells 12. As such, it facilitates adaptation to the battery cells 12 of different dimensions and sizes in a case of a particular spatial volume of the accommodating cavity 11a, so as to improve space utilization of the spatial volume of the accommodating cavity 11a.

In some embodiments, referring to FIG. 6, FIG. 8, and FIG. 9, the battery 10 includes a reinforcing beam 114. The reinforcing beam 114 is provided in the accommodating cavity 11a. The reinforcing beam 114 is located between the two rows of battery cells 12 and is connected to the inner wall of the accommodating cavity 11a on two opposite sides. An extension direction of the reinforcing beam 114 is the same as an arrangement direction of at least one row of battery cells 12. As such, by providing the reinforcing beam 114, the overall structural strength of the battery 10 can be improved, and effects of separating different rows of battery cells 12 and restricting positions of the battery cells 12 can be achieved.

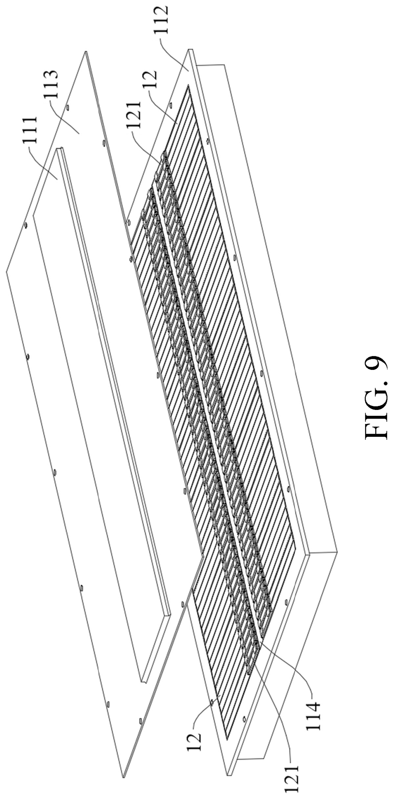

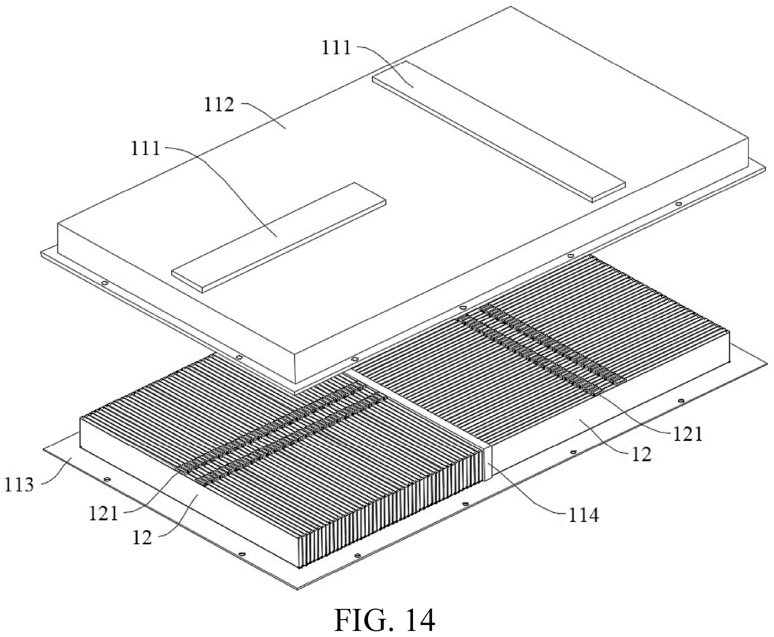

It can be understood that, arrangement directions of the two rows of battery cells 12 located on two sides of the reinforcing beam 114 may be the same, for example, as in the embodiment of FIG. 9; or may be different, for example, as in the embodiment of FIG. 14.

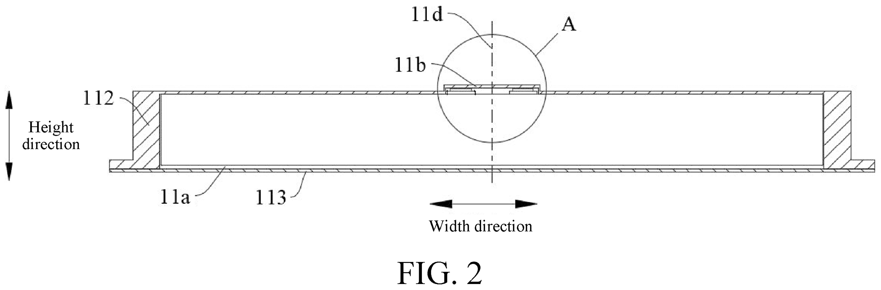

In some embodiments, referring to FIG. 2 and FIG. 4, at least one group of battery cells 12 are arranged in a length direction of the accommodating box 11. The avoidance region 11b corresponding to the group of battery cells 12 is symmetrically disposed with respect to a first central plane 11d in a width direction of the accommodating box 11.

The length direction of the accommodating box 11 refers to a direction of a longest dimension of the three-dimensional dimensions of the accommodating box 11.

The width direction of the accommodating box 11 refers to a direction of the three-dimensional dimensions of the accommodating box 11 that is perpendicular to the length direction and a gravity direction.

The first central plane 11d refers to a reference plane that is perpendicular to a width direction of the battery 10 and located at a position of half of a dimension of the battery 10 in the width direction of the battery.

As such, it facilitates forming, on two sides of the boss 111 in a width direction thereof, a flat region having a large area on the outer surface of the accommodating box 11 provided with the boss 111, facilitating the arrangement, in this region, of other parts and components having large outer contour dimensions in the battery 10, thereby providing convenience for the arrangement of the other parts and components in the battery 10.

In some embodiments, referring to FIG. 4, one group of battery cells 12 are provided and are arranged in the length direction of the accommodating box 11. The avoidance region 11b corresponding to the group of battery cells 12 is symmetrically disposed with respect to the first central plane 11d in the width direction of the accommodating box 11. As such, it facilitates the arrangement of the terminal post 122 at a middle position of the battery cell 12 in a length direction of the battery cell 12, thereby facilitating the shortening of a current transmission path.

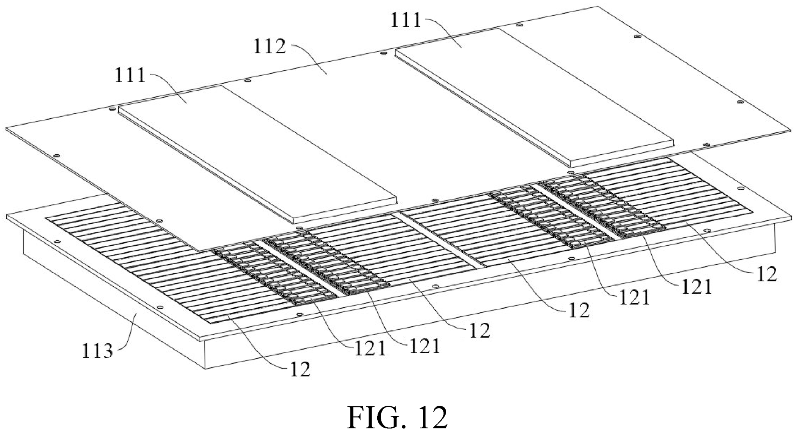

In some embodiments, referring to FIG. 4, the length direction of the battery cell 12 is the width direction of the accommodating box 11. In some other embodiments, referring to FIG. 12, the length direction of the battery cell 12 is the length direction of the accommodating box 11.

It can be understood that, the battery cells 12 at two ends of each row of battery cells 12 in the arrangement direction thereof each abut against the inner wall of the accommodating cavity 11a on two opposite sides in the arrangement direction thereof, so as to restrict the positions of the battery cells 12.

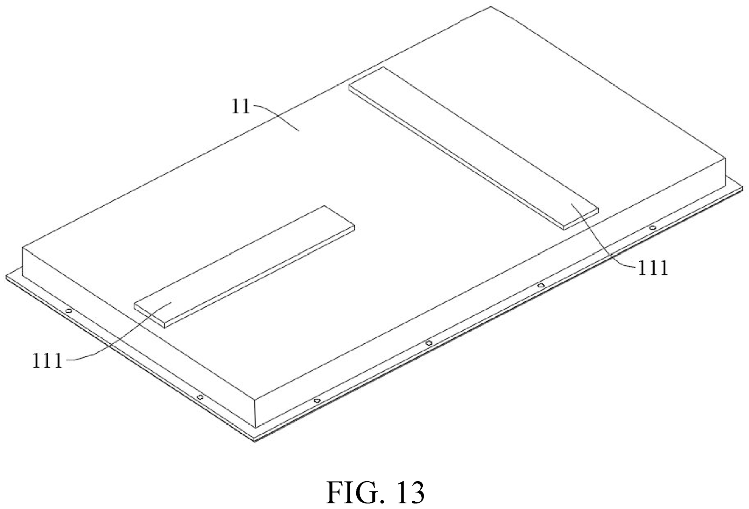

In some embodiments, referring to FIG. 13 and FIG. 14, at least one group of battery cells 12 are arranged in a first direction, and at least one group of battery cells 12 are arranged in a second direction. The first direction is orthogonal to the second direction.

As such, on the one hand, the capability of adapting to dimensions of different types of battery cells 12 can be improved. On the other hand, two groups of battery cells 12 respectively arranged in the two directions that are orthogonal to each other can further enhance the strength of the battery 10, thereby improving the overall structural strength of the battery 10.

Specific orientations of the first direction and the second direction are not limited. For example, referring to FIG. 1, the first direction is a length direction of the battery 10, and the second direction is a width direction of the battery 10.

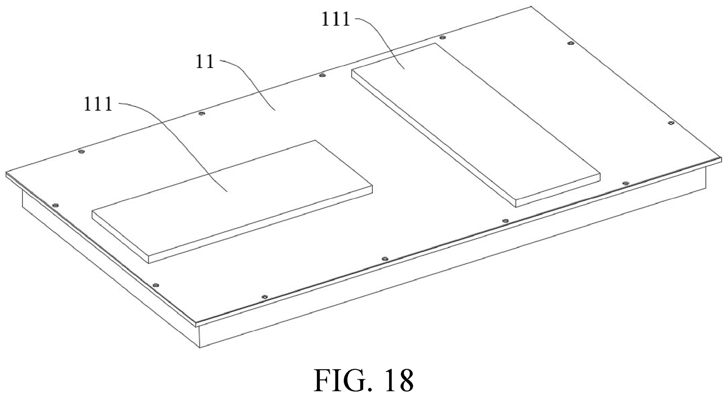

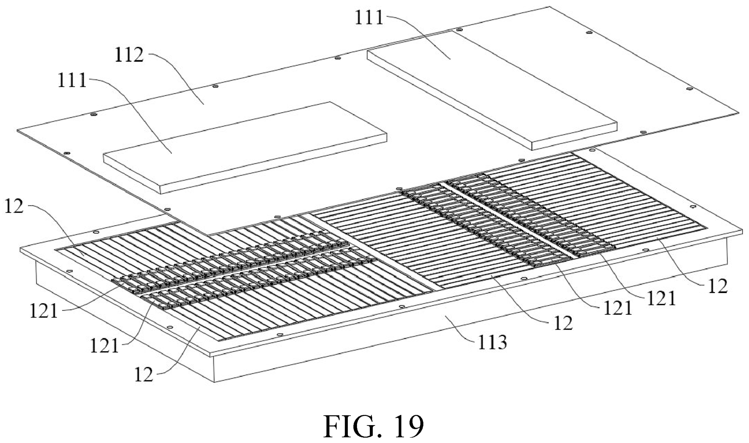

In some embodiments, referring to FIG. 18 and FIG. 19, two groups of battery cells 12 are arranged in the first direction, and two groups of battery cells 12 are arranged in the second direction. In the two groups of battery cells 12 arranged in a same direction, the protrusion 121 is located at an end of the battery cell 12 close to the other row of battery cells 12. As such, while the overall structural strength of the battery 10 is improved, the reduction of the number of the bosses 111 is facilitated, which is beneficial to implementing the high-voltage connection between the battery cells 12 of different rows in a same arrangement direction through the same accommodating groove 11c.

In some embodiments, referring to FIG. 4, one group of battery cells 12 are arranged in the length direction of the battery 10. In the width direction of the battery 10, each battery cell 12 is attached to the inner wall of the accommodating cavity 11a on two sides in the width direction, thereby effectively improving the space utilization efficiency in the accommodating cavity 11a, and facilitating the improvement of the overall structural strength of the battery 10.

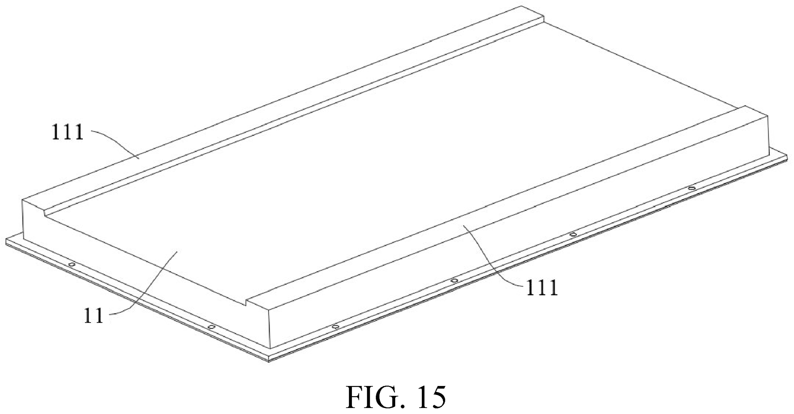

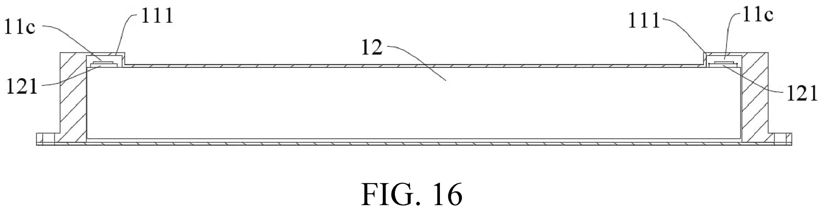

In some embodiments, referring to FIG. 15, FIG. 16, and FIG. 17, two protrusions 121 are provided. The terminal posts 122 are respectively provided on both of the protrusions 121 and have opposite polarities. The two protrusions 121 are each located at an end of the battery cell 12 in the length direction of the battery cell 12. At least two avoidance regions 11b are provided, so that the two protrusions 121 on the battery cell 12 are respectively located in different accommodating grooves 11c.

That is, the two terminal posts 122 of different polarities are respectively located in the different accommodating grooves 11c.

The length direction of the battery cell 12 refers to a direction of a largest dimension of three-dimensional dimensions of the battery cell 12.

As such, the probability of a short circuit caused by an electrical connection between the terminal posts 122 of different polarities due to reasons such as accidental contact is reduced, improving the use safety of the battery 10.

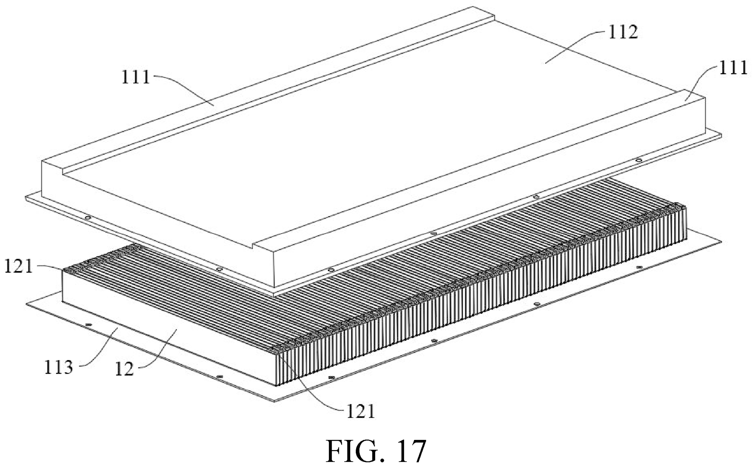

In some embodiments, referring to FIG. 17, the plurality of battery cells 12 are arranged into one row perpendicular to the length direction of the battery cell 12. The protrusions 121 on a side in the length direction of the battery cell 12 are located in the same accommodating groove 11c. As such, the terminal posts 122 on the protrusions 121 adjacent to each other in the arrangement direction of the battery cells 12 that are located in the same accommodating groove 11c have opposite polarities, so that the terminal posts 122 of different polarities can be electrically connected within the same accommodating groove 11c by using the bus-bar member 13, facilitating the reduction of a dimension of the bus-bar member 13 and the simplification of an arrangement manner of the bus-bar member 13.

In some embodiments, referring to FIG. 15 to FIG. 17, the plurality of battery cells 12 are arranged into one row in the first direction. Two avoidance regions 11b are provided and both extend in the first direction. The two avoidance regions 11b are each located at an end of the accommodating box 11 in the second direction. The first direction is orthogonal to the second direction.

As such, it facilitates forming a flat region having a large area between the two avoidance regions 11b, facilitating the arrangement, in this region, of other parts and components having large outer contour dimensions in the battery 10, thereby providing convenience for the arrangement of the other parts and components in the battery 10.

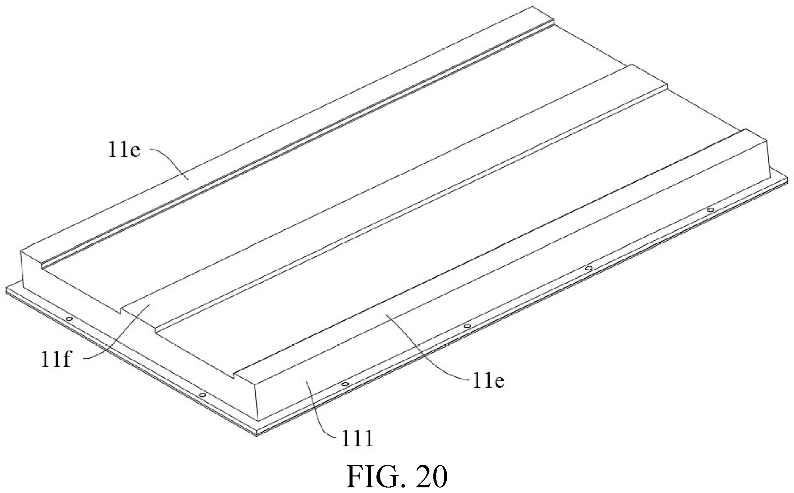

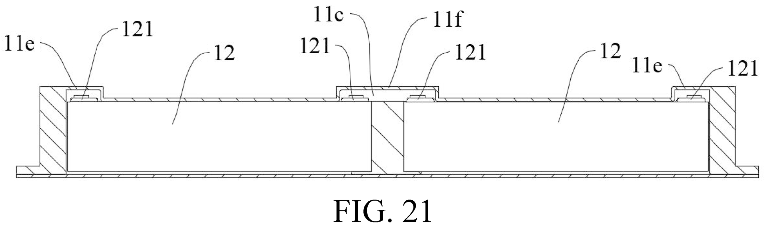

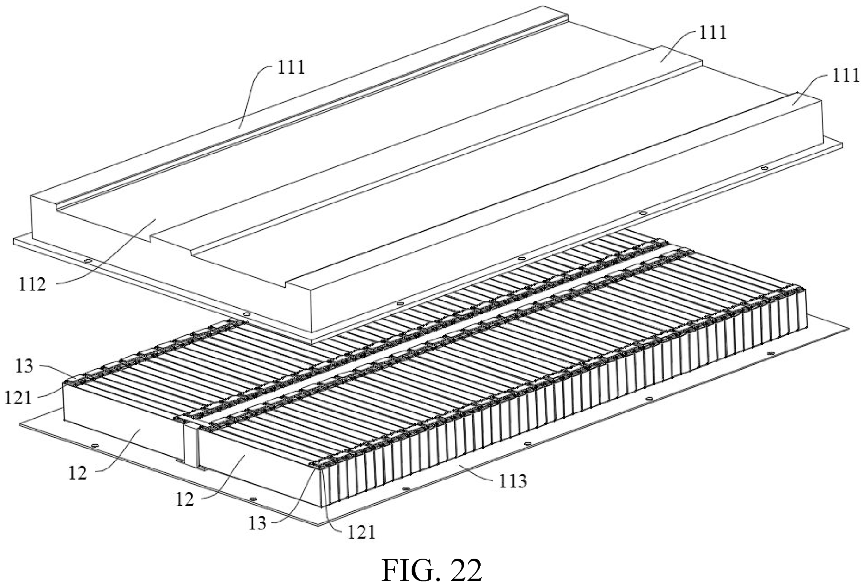

In some embodiments, referring to FIG. 20, FIG. 21, and FIG. 22, the plurality of battery cells 12 are divided into two rows which are arranged in parallel. The battery cells 12 in each row are arranged in the first direction. The avoidance region 11b extends in the first direction. A plurality of avoidance regions 11b are provided and include first sub-regions 11e and a second sub-region 11f. The second sub-region 11f is located between the two first sub-regions 11e and is spaced apart from the two first sub-regions in the second direction. The two first regions are each located at an end of the accommodating box 11 in the second direction. One protrusion 121 of the battery cell 12 in each row is located in the accommodating groove 11c corresponding to the first sub-region 11e. The other protrusion 121 thereof and one protrusion 121 of a battery cell 12 in the other row are jointly located in the accommodating groove 11c corresponding to the first sub-region 11e. The first direction is orthogonal to the second direction.

The first sub-region 11e means that the accommodating groove 11c corresponding thereto accommodates the protrusions 121 on one row of battery cells 12 that are on a side away from the other row of battery cells 12.

The second sub-region 11f means that the accommodating groove 11c corresponding thereto accommodates the protrusions 121 on one row of battery cells 12 that are on a side close to the other row of battery cells 12. and one of the two protrusions 121 of each battery cell 12 is located therein.

That is, in the two protrusions 121 of each battery cell 12, one protrusion 121 is located in the accommodating groove 11c corresponding to the first sub-region 11e, and the other protrusion 121 and a protrusion 121 of a battery cell 12 in the other row are located in the accommodating groove 11c corresponding to the second sub-region 11f.

As such, it facilitates the adaptation to the battery cells 12 of different dimensions in the second direction, and facilitates an electrical connection between the battery cells 12 of different rows using the bus-bar member 13.

It can be understood that, a flat region having a large area is formed between each of the two first sub-regions 11e and the second sub-region 11f, facilitating the arrangement, in this region, of other parts and components having large outer contour dimensions in the battery 10, thereby providing convenience for the arrangement of the other parts and components in the battery 10.

A specific manner of connecting the terminal posts 122 of the battery cells 12 by using the bus-bar member 13.

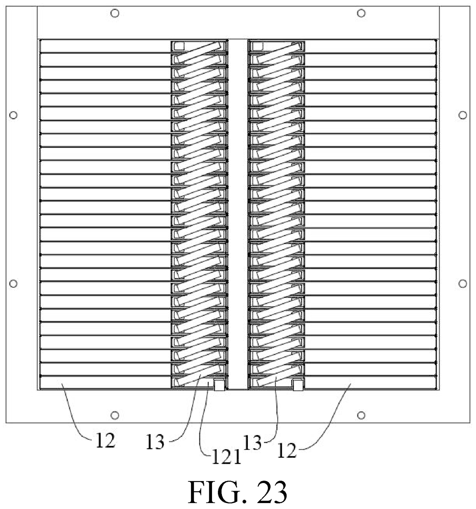

In some embodiments, referring to FIG. 23, the battery 10 includes the bus-bar member 13. A plurality of battery cells 12 are provided. The plurality of battery cells 12 are divided into at least one group. The battery cells 12 in each group form one row. The terminal post 122 is provided on the protrusion 121. Two terminal posts 122 are provided and have opposite polarities. The bus-bar member 13 electrically connects two terminal posts 122 of two adjacent ones of the battery cells 12 in each group that have opposite polarities. The terminal posts 122 of the two adjacent battery cells 12 in each group are correspondingly disposed, so that the terminal posts 122 of the battery cells 12 in each group are arranged into two rows, where the terminal posts 122 in each row have the same polarity.

As such, it facilitates the arrangement of the battery cells 12 of a same model in a unified arrangement direction, facilitating model simplification of the battery cells 12 in the battery 10, thereby simplifying a process of the battery 10, and reducing production costs.

It can be understood that, referring to FIG. 23, the terminal posts 122 of the adjacent battery cells 12 in each group are electrically connected using the bus-bar member 13 in a diagonal connection manner.

In some embodiments, referring to FIG. 24, the battery 10 includes the bus-bar member 13. A plurality of battery cells 12 are provided. The plurality of battery cells 12 are divided into at least one group. The battery cells 12 in each group form one row. The terminal post 122 is provided on the protrusion 121. Two terminal posts 122 are provided and have opposite polarities. The bus-bar member 13 electrically connects two terminal posts 122 of two adjacent ones of the battery cells 12 in each group that have opposite polarities. The terminal posts 122 of the two adjacent battery cells 12 in each group are correspondingly disposed, so that the terminal posts 122 of the battery cells 12 in each group are arranged into two rows, where two adjacent ones of the terminal posts 122 in each row have opposite polarities.

As such, it facilitates shortening a distance between two terminal posts 122 of the adjacent battery cells 12 in the same group that have opposite polarities, thereby facilitating shortening a connection length of the bus-bar member 13.

In some embodiments, referring to FIG. 4, FIG. 9, FIG. 12, FIG. 14, FIG. 17, FIG. 19, and FIG. 22, the accommodating box 11 includes a box cover 112 and a box body 113. The box cover 112 covers the top of the box body 113 to jointly form the accommodating cavity 11a by enclosing. The box cover 112 is detachably connected to the box body 113, to facilitate the placement of the battery cell 12 into the accommodating cavity 11a.

The avoidance region 11b may be provided only on the box cover 112; or may be provided only on the box body 113. Alternatively, the avoidance region 11b may be provided on both the box cover 112 and the box body 113.

In some embodiments, the avoidance region 11b is provided at the top of the accommodating box 11, to reduce the probability of compressional deformation of the boss 111 under the action of gravity.

Eight specific embodiments are briefly described below with reference to the accompanying drawings.

### First Embodiment

Referring to FIG. 1 to FIG. 4, the plurality of battery cells 12 are arranged into one group in the length direction of the accommodating box 11. One avoidance region 11b is provided and extends in the length direction of the accommodating box 11. The protrusions 121 of all the battery cells 12 are located in the same accommodating groove 11c. The avoidance region 11b is symmetrically disposed with respect to the first central plane 11d in the width direction of the accommodating box 11.

### Second Embodiment

Referring to FIG. 5 and FIG. 6, the plurality of battery cells 12 are arranged into two groups in the width direction of the accommodating box 11. Two avoidance regions 11b are provided and extend in the width direction of the accommodating box 11. The protrusions 121 of each group of battery cells 12 are located in the accommodating groove 11c corresponding to the same avoidance region 11b.

### Third Embodiment

Referring to FIG. 7 to FIG. 9, the plurality of battery cells 12 are arranged into two groups in parallel in the length direction of the accommodating box 11. One avoidance region 11b is provided and extends in the length direction of the accommodating box 11. The protrusions 121 of all the battery cells 12 are located in the same accommodating groove 11c. Moreover, the protrusion 121 is located at an end of the battery cell 12 close to the other row of battery cells 12.

### Fourth Embodiment

Referring to FIG. 10 to FIG. 12, the plurality of battery cells 12 are arranged into four groups in parallel in the width direction of the accommodating box 11. Two avoidance regions 11b are provided and extend in the width direction of the accommodating box 11. The two avoidance regions 11b are spaced apart from each other in the length direction of the accommodating box 11. The protrusions 121 of each two groups of battery cells 12 are located in the accommodating groove 11c corresponding to the same avoidance region 11b. Moreover, the protrusion 121 is located at an end of the battery cell 12 close to the other row of battery cells 12.

### Fifth Embodiment

Referring to FIG. 13 and FIG. 14, the plurality of battery cells 12 are divided into two groups. One group is arranged in the length direction of the accommodating box 11, and the other group is arranged in the width direction of the accommodating groove 11c. Two avoidance regions 11b are provided, with one extending in the length direction of the accommodating box 11, and the other extending in the width direction of the accommodating groove 11c. The protrusions 121 of the group of batteries 10 arranged in the length direction are located in the accommodating groove 11c corresponding to the avoidance region 11b extending in the length direction. The protrusions 121 of the group of batteries 10 arranged in the width direction are located in the accommodating groove 11c corresponding to the avoidance region 11b extending in the width direction.

### Sixth Embodiment

Referring to FIG. 15 to FIG. 17, the plurality of battery cells 12 are arranged into one group in the length direction of the accommodating box 11. Two protrusions 121 of the battery cell 12 are each located at an end of the battery cell 12 in the length direction of the box body 113. Two avoidance regions 11b are provided and both extend in the length direction of the accommodating box 11. The two avoidance regions 11b are each located at an end of the accommodating box 11 in the width direction thereof. The two protrusions 121 on the battery cell 12 are respectively located in different accommodating grooves 11c corresponding to the avoidance regions 11b.

### Seventh Embodiment

Referring to FIG. 18 and FIG. 19, the plurality of battery cells 12 are divided into one group arranged in the length direction of the accommodating box 11 and one group arranged in the width direction of the accommodating box 11. The battery cells 12 in each group are divided into two rows in parallel. Two avoidance regions 11b are provided, with one extending in the length direction of the accommodating box 11, and the other extending in the width direction of the accommodating groove 11c. The protrusions 121 of the group of batteries 10 arranged in the length direction are located in the accommodating groove 11c corresponding to the avoidance region 11b extending in the length direction. The protrusions 121 of the group of batteries 10 arranged in the width direction are located in the accommodating groove 11c corresponding to the avoidance region 11b extending in the width direction. Moreover, the protrusion 121 in either of the two groups of battery cells 12 in a same arrangement direction is located at an end of the battery cell 12 close to the other row of battery cells 12.

### Eighth Embodiment

Referring to FIG. 20 to FIG. 22, the plurality of battery cells 12 are divided into two rows which are arranged in parallel. The battery cells 12 in each row are arranged in the length direction of the accommodating box 11. The avoidance region 11b extends in the length direction of the accommodating box 11. A plurality of avoidance region 11b are provided and include the first sub-regions 11e and the second sub-region 11f. The second sub-region 11f is located between the two first sub-regions 11e and is spaced apart from the two first sub-regions in the width direction of the accommodating box 11. The two first regions are each located at an end of the accommodating box 11 in the width direction of the accommodating box 11. One protrusion 121 of the battery cell 12 in each row is located in the accommodating groove 11c corresponding to the first sub-region 11e. The other protrusion 121 thereof and one protrusion 121 of a battery cell 12 in the other row are jointly located in the accommodating groove 11c corresponding to the first sub-region 11e.

Embodiments of the present disclosure further provide a power consuming apparatus. The power consuming apparatus includes the battery 10 according to the foregoing embodiments. The battery 10 serves as a power supply of the power consuming apparatus.

As such, the use of the battery 10 according to the foregoing embodiments facilitates the improvement of the energy density and space utilization of the battery 10.

The various embodiments/implementations provided in the present disclosure can be combined with each other without contradiction.

The foregoing descriptions are merely preferred embodiments of the present disclosure, but are not intended to limit the present disclosure. For a person skilled in the art, various modifications and changes can be made to the present application. Any modification, equivalent replacement, or improvement made within the spirit and principle of the present disclosure shall fall within the protection scope of the present disclosure.

### Industrial Applicability

Embodiments of the present disclosure provide a battery. The battery includes an accommodating box and a battery cell. An accommodating cavity is provided in the accommodating box. The battery cell is disposed in the accommodating cavity. The accommodating box is provided with an avoidance region. The avoidance region protrudes in a direction away from the battery cell to form a boss, so that an accommodating groove is formed on a corresponding inner wall of the accommodating cavity. A protrusion is formed on an outer surface of the battery cell, where at least part of the protrusion is located in the accommodating groove. In the battery according to the embodiments of the present disclosure, the avoidance region is provided on the accommodating box, so that the protrusion on the battery cell can extend into the accommodating groove, facilitating the reduction of a three-dimensional dimension of the accommodating box and the reduction of an overall volume of the battery, which is beneficial to the improvement of an energy density and space utilization of the battery.

## Claims

1. A battery, the battery comprising an accommodating box and a battery cell, wherein an accommodating cavity is provided in the accommodating box, the battery cell is disposed in the accommodating cavity, the accommodating box is provided with an avoidance region, the avoidance region protrudes in a direction away from the battery cell to form a boss, so that an accommodating groove is formed on a corresponding inner wall of the accommodating cavity, and a protrusion is formed on an outer surface of the battery cell, wherein at least part of the protrusion is located in the accommodating groove.

2. The battery according to claim 1, wherein a height of the boss does not exceed 2 times a height of the part of the protrusion in the accommodating groove.

3. The battery according to claim 1 or 2, wherein a spacing between a side wall of the accommodating groove and the protrusion is not greater than 30 mm.

4. The battery according to any one of claims 1 to 3, wherein a terminal post is provided on the protrusion, and the terminal post is located in the accommodating groove and is spaced apart from an inner wall of the accommodating groove.

5. The battery according to claim 4, wherein a spacing between a bottom wall of the accommodating groove and the terminal post is not greater than 20 mm.

6. The battery according to any one of claims 1 to 5, wherein a plurality of battery cells are provided, the plurality of battery cells are divided into at least one group, the number of the avoidance regions is the same as the number of groups of the battery cells, and the protrusions of all the battery cells in each group are located in the same accommodating groove.

7. The battery according to claim 6, wherein the battery cells in each group are divided into two rows in parallel, and the battery cells in the two rows are arranged in a same direction, wherein the protrusions of all the battery cells are located in the same accommodating groove, and the protrusion is located at an end of the battery cell close to the other row of battery cells.

8. The battery according to claim 6 or 7, wherein at least one group of battery cells are arranged in a length direction of the accommodating box, and the avoidance region corresponding to the group of battery cells is symmetrically disposed with respect to a first central plane in a width direction of the accommodating box.

9. The battery according to any one of claims 6 to 8, wherein at least one group of battery cells are arranged in a first direction, at least one group of battery cells are arranged in a second direction, and the first direction is orthogonal to the second direction.

10. The battery according to any one of claims 1 to 9, wherein two protrusions are provided, the terminal posts are respectively provided on both of the protrusions and have opposite polarities, the two protrusions are each located at an end of the battery cell in a length direction of the battery cell, and at least two avoidance regions are provided, so that the two protrusions on the battery cell are respectively located in different accommodating grooves.

11. The battery according to claim 10, wherein the plurality of battery cells are arranged into one row in the first direction, two avoidance regions are provided and both extend in the first direction, the two avoidance regions are each located at an end of the accommodating box in the second direction, and the first direction is orthogonal to the second direction.

12. The battery according to claim 10 or 11, wherein the plurality of battery cells are divided into two rows which are arranged in parallel, the battery cells in each row are arranged in the first direction, the avoidance region extends in the first direction, a plurality of avoidance regions are provided and comprise first sub-regions and a second sub-region, the second sub-region is located between the two first sub-regions and is spaced apart from the two first sub-regions in the second direction, the two first regions are each located at an end of the accommodating box in the second direction, one protrusion of the battery cell in each row is located in the accommodating groove corresponding to the first sub-region, the other protrusion thereof and one protrusion of a battery cell in the other row are jointly located in the accommodating groove corresponding to the first sub-region, and the first direction is orthogonal to the second direction.

13. The battery according to any one of claims 1 to 12, wherein the battery comprises a bus-bar member, a plurality of battery cells are provided, the plurality of battery cells are divided into at least one group, the battery cells in each group form one row, the terminal post is provided on the protrusion, two terminal posts are provided and have opposite polarities, the bus-bar member electrically connects two terminal posts of two adjacent ones of the battery cells in each group that have opposite polarities, and the terminal posts of the two adjacent battery cells in each group are correspondingly disposed, so that the terminal posts of the battery cells in each group are arranged into two rows, wherein the terminal posts in each row have the same polarity;
alternatively, two adjacent ones of the terminal posts in each row have opposite polarities.

14. A power consuming apparatus, wherein the power consuming apparatus comprises the battery according to any one of claims 1 to 13, and the battery serves as a power supply of the power consuming apparatus.
